# EUROPÄISCHE PATENTANMELDUNG

(11) **EP 0 625 751 A1**
(43) Veröffentlichungstag der Anmeldung: **23.11.1994**
(21) Anmeldenummer: 93107889.3
(22) Anmeldetag: 14.05.1993
(51) Int. Cl.: G06F 11/00, G06F 11/14, H04L 1/16

(54) **Sicheres Informationsübertragungsverfahren für einen Bus**

(71) Anmelder: SIEMENS AKTIENGESELLSCHAFT, D-80333 München (DE)
(72) Erfinder: Mössner, Rudolf, Dipl.-Ing. (FH), W-8460 Schwandorf (DE); Lotter, Roland, Dipl.-Ing. (FH), W-8460 Schwandorf (DE); Maul, Jürgen, Dipl.-Ing. (FH), W-8458 Sulzbach-Rosenberg (DE)

(57) **Zusammenfassung**

Die vorliegende Erfindung betrifft ein Informationsübertragungsverfahren für einen einem elektrischen Gerät (1) zugeordneten Bus (6), der eine Haupteinheit (2) mit mindestens einer Nebeneinheit (3 bis 5) verbindet. Erfindungsgemäß kann die Übertragungssicherheit von Informationen über den Bus (6) erhöht werden, wenn Informationsübertragungen auf Fehler überprüft werden, bei Feststellen einer fehlerhaften Informationsübertragung einer Wiederholung der Informationsübertragung erfolgt, eine Fehlermeldung aber erst dann erfolgt, wenn bei einer vorgegebenen Anzahl von aufeinanderfolgenden Informationsübertragungen stets eine fehlerhafte Informationsübertragung festgestellt wurde.

## Beschreibung

Die vorliegende Erfindung betrifft ein Informationsübertragungsverfahren für einen einem elektrischen Gerät zugeordneten Bus, der eine Haupteinheit mit mindestens einer Nebeneinheit verbindet.

Derartige Informationsübertragungsverfahren werden allgemein verwendet, unter anderem bei Automatisierungsgeräten bzw. bei modularen speicherprogrammierbaren Steuerungen. Der Bus ist dabei je nach Gerät als serieller oder als paralleler Bus ausgebildet. Beispiel eines Automatisierungsgeräts mit seriellem Bus ist das Siemens Automatisierungsgerät Simatic S5-100 U, Beispiel eines Automatisierungsgeräts mit parallelem Bus das Automatisierungsgerät Simatic S5-115 U. Beide Geräte werden von der Siemens AG seit Jahren hergestellt und vertrieben. Sie sind weit verbreitet.

Mit Automatisierungsgeräten werden industrielle Anlagen und Prozesse gesteuert. Übertragungsfehler zwischen der Haupteinheit und der mindestens einen Nebeneinheit können daher zu einer fehlerhaften Steuerung der Anlage bzw. des Prozesses führen und so hohe Sach- und/oder Personenschäden verursachen. Eine sichere Datenübertragung zwischen der Haupteinheit und der mindestens einen Nebeneinheit, auch unter den rauhen Bedingungen des Industriebetriebs, ist daher unerläßlich. Insbesondere muß die Kommunikation über den Bus auch unter den Prüfbedingungen der IEC-Norm 801-2/3 gewährleistet sein.

Beim Stand der Technik werden in der Haupteinheit und den Nebeneinheiten immer aufwendigere Busanschaltungen verwendet, um eine sichere Datenübertragung zu gewährleisten.

Dies führt zu einem hohen Hardwareaufwand und damit auch hohen Kosten. Eine Überprüfung der übertragenen Informationen findet hingegen nicht statt. Es wird lediglich überprüft, ob eine von der Haupteinheit angesprochene Nebeneinheit innerhalb einer geforderten Reaktionszeit antwortet. Ist dies nicht der Fall, verursacht dies eine Fehlermeldung, welche die Abarbeitung einer vom Anwender zu programmierenden Fehlerbehandlungsroutine zur Folge hat. Je nach Fehlerbehandlungsroutine wird das Automatisierungsgerät entweder gestoppt oder aber das Nichtantworten der angesprochenen Nebeneinheit ignoriert.

Die Aufgabe der vorliegenden Erfindung besteht darin, bei minimalem Hardwareaufwand eine extrem sichere Datenübertragung zwischen der Haupteinheit und der mindestens einen Nebeneinheit über den dem Gerät zugeordneten Bus zu erreichen.

Die Aufgabe wird dadurch gelöst,
- daß Informationsübertragungen auf Fehler überprüft werden,
- daß bei Feststellen einer fehlerhaften Informationsübertragung eine Wiederholung der Informationsübertragung erfolgt und
- daß eine Fehlermeldung erst dann erfolgt, wenn bei einer vorgegebenen Anzahl von aufeinanderfolgenden Informationsübertragungen stets eine fehlerhafte Informationsübertragung festgestellt wurde.

Durch diese Maßnahme kann nämlich der erforderliche Hardwareaufwand drastisch reduziert werden. Eine durch den verringerten Hardwareaufwand verursachte statistische Fehlerwahrscheinlichkeit von beispielsweise 10⁻⁴ wäre bei einem normalen Bus untragbar. Sie würde nämlich jede Sekunde zu mindestens einer fehlerhaften Informationsübertragung führen. Bei der vorliegenden Erfindung dagegen würde diese Fehlerquote bei z. B. maximal 2 Wiederholungen lediglich zu einer minimal höheren Belastung fuhren, da - im statistischen Mittel - jede zehntausendste Informationsübertragung wiederholt werden müßte.

Wenn auf dem Bus mehrere Informationsarten, z. B. Befehle und Daten, übertragen werden und die Fehlermeldung informationsartspezifisch ist, kann flexibler auf fehlerhafte Informationsübertragungen reagiert werden.

Vorzugsweise werden die übertragenen Informationen auf Plausibilität überprüft und eine Informationsübertragung als fehlerhaft festgestellt, wenn die übertragenen Informationen unplausibel sind. Werden beispielsweise stets 8 Bit übertragen, während das elektrische Gerät nur 60 Befehle kennt, so kann der Empfänger überprüfen, ob überhaupt ein möglicher Befehl vorliegt.

Zur weiteren Erhöhung der Übertragungssicherheit umfassen die übertragenen Informationen vorzugsweise zusätzlich zu den Nutzinformationen auch Prüfinformationen, z. B. pro Byte ein Parity-Bit, so daß aufgrund der Prüfinformationen festgestellt werden kann, ob eine Informationsübertragung fehlerhaft ist.

Wenn der Bus als serieller Bus ausgebildet ist und Informationsübertragungen stets aus ganzzahligen Vielfachen einer festen Anzahl von Bits bestehen, kann eine fehlerhafte Informationsübertragung auch dadurch festgestellt werden, daß die Anzahl der empfangenen Bits von einem ganzzahligen Vielfachen der festen Anzahl von Bits abweicht.

Weitere Vorteile und Einzelheiten ergeben sich aus der nachfolgenden Beschreibung eines Ausführungsbeispiels, anhand der Zeichnungen und in Verbindung mit den weiteren Ansprüchen. Dabei zeigen:
- FIG 1: zeigt ein Blockschaltbild eines Automatisierungsgeräts
- FIG 2: ein Blockschaltbild einer Peripheriebaugruppe des Automatisierungsgerät und
- FIG 3 und 4: das Prinzip der Informationsübertragung,
- FIG 5 bis 7: die Prinzipien der Fehlererkennung und
- FIG 8: das Prinzip der Rückmeldung.

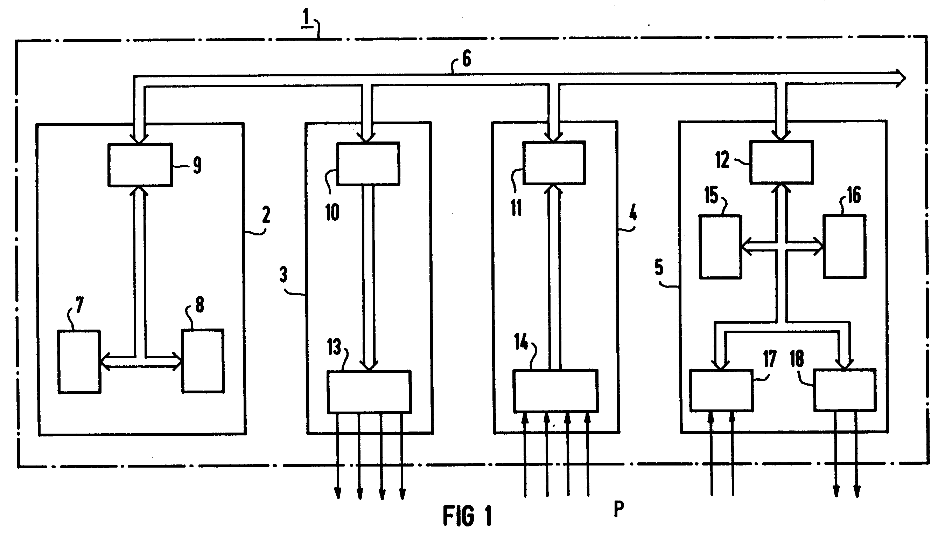

Gemäß FIG 1 besteht das Automatisierungsgerät 1 aus einer Zentraleinheit 2 und Peripheriebaugruppen 3 bis 5, die über den seriellen Bus 6 miteinander verbunden sind. Die Zentraleinheit 2 als Haupteinheit des elektrischen Geräts weist einen Speicher 7 auf, in dem unter anderem ein Steuerungsprogramm abgespeichert ist. Dieses Steuerungsprogramm wird vom Prozessor 8 abgearbeitet. Bei der Abarbeitung des Steuerungsprogramms greift der Prozessor 8 über die Busanschaltung 9 auf den Bus 6 zu. Hierbei gibt der Prozessor 8 jeweils einen Befehl an die Peripheriebaugruppen 3 bis 5 aus. Nach der Ausgabe des Befehls gibt der Prozessor 8 Daten an die Peripheriebaugruppen 3 bis 5 aus oder liest Daten von ihnen ein.

Wie aus FIG 1 ersichtlich ist, weisen die Peripheriebaugruppen 3 bis 5, die die Nebeneinheiten des elektrischen Geräts darstellen, ebenfalls Busanschaltungen 10, 11, 12 auf. Im vorliegenden Fall ist die Peripheriebaugruppe 3 eine Digital-Ausgabebaugruppe, die über ein Latch 13 Signale an (der Übersichtlichkeit halber nicht dargestellte) Stellglieder zum Steuern eines Prozesses P ausgeben kann. Die Peripheriebaugruppe 4 ist eine Digital-Eingabebaugruppe, die über ein Latch 14 und (der Übersichtlichkeit halber nicht dargestellte) Sensoren Signale vom Prozeß P empfangen kann. Die Peripheriebaugruppe 5 ist eine intelligente Peripherieeinheit. Sie weist eine eigene Intelligenz 15, z. B. einen Mikrocontroller, und einen Speicher 16 auf, so daß sie einen kleinen Teilprozeß über die Latches 17, 18 selbständig steuern kann.

Obenstehend beschriebene Peripheriebaugruppen 3 bis 5 stellen selbstverständlich nur eine beispielhafte Auswahl dar. Selbstverständlich könnten Peripheriebaugruppen auch in anderer Anzahl und Konfiguration mit der Zentraleinheit 2 verbunden sein.

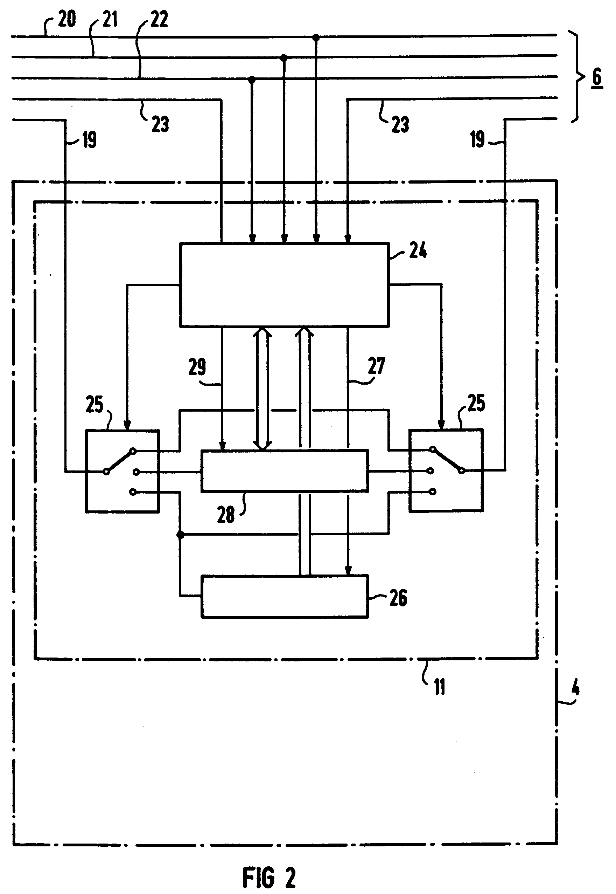

Der Bus 6 ist im vorliegenden Fall ein geräteinterner Bus, d. h., er ist innerhalb des Automatisierungsgeräts 1 angeordnet. Es wäre aber auch möglich, daß der Bus 6 außerhalb des Automatisierungsgeräts 1 verläuft. Dies wäre beispielsweise der Fall, wenn die Zentraleinheit 2 und Peripheriebaugruppen 3 bis 5 gekapselte Baugruppen sind, die nahe beieinander, aber nicht innerhalb eines gemeinsamen Gehäuses angeordnet sind und der Bus 6 die Baugruppen miteinander verbindet. In jedem Fall aber ist der Bus 6 einem ganzheitlichen System zugeordnet, im Gegensatz beispielsweise zu verteilten Systemen, bei denen die Peripheriebaugruppen weit voneinander und von der Zentraleinheit 2 entfernt angeordnet sein können. Anhand der Figuren 2 bis 4 wird nunmehr die Funktionsweise des Busses 3 näher erläutert.

Gemäß FIG 2 besteht der Bus 6 aus fünf Leitungen. Es sind dies die Datenleitung 19, die Taktleitung 20, die Befehlssteuerleitung 21, die Datensteuerleitung 22 und die Rückmeldeleitung 23. Die Leitungen 19 bis 23 haben folgende Funktionen:
- Über die Datenleitungen 19 werden Befehle und Daten von der Zentraleinheit 2 zu den Peripheriebaugruppen 3 bis 5 übertragen. Ferner werden über die Datenleitung 19 Daten von den Baugruppen 3 bis 5 zur Zentraleinheit 2 übertragen.
- Die Taktleitung 20 übermittelt ein Taktsignal, das die Geschwindigkeit der seriellen Informationsübertragung über die Datenleitung 19 bestimmt.
- Mittels der Steuerleitungen 21 und 22 wird der momentane Buszustand festgelegt. Führen beide Steuerleitungen 21, 22 ein High-Signal, so befindet sich der Bus 6 im Ruhezustand. Geht die Befehlssteuerleitung 21 auf low, so zeigt das den Beginn einer Befehlsübertragung an. Geht die Datensteuerleitung 22 auf low, so bedeutet dies den Beginn einer Datenübertragung.
- Über die Rückmeldeleitung 23 übermitteln die Baugruppen 3 bis 5 die Übernahme von Befehlen bzw. Daten und zeigen das Ende einer Datenübertragung beim Einlesen von Daten in die Zentraleinheit 2 an.

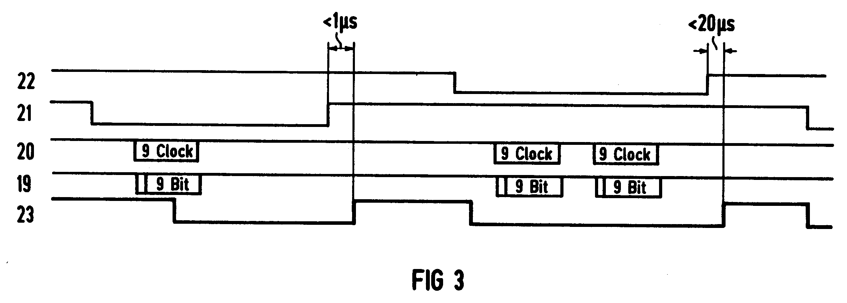

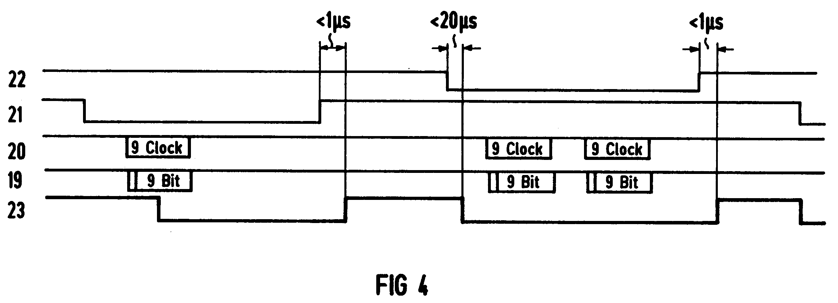

Der geräteinterne Bus 6 des Automatisierungsgeräts 1 ist offensichtlich ein serieller Bus. Es wird bei Befehlsübertragungen als echter serieller Bus im Broadcasting-Modus betrieben, bei Datenübertragungen als Schieberegister. Dies wird später in Verbindung mit den Figuren 3 und 4 noch näher erläutert.

FIG 2 zeigt beispielhaft die Busanschaltung 11 der Peripheriebaugruppe 4. Die Busanschaltungen der anderen Peripheriebaugruppen 3 und 5 sind im wesentlichen gleich aufgebaut.

Gemäß FIG 2 weist die Busanschaltung 11 einen Controller 24 auf, der die Informationsübertragung zwischen der Zentraleinheit 2 und der Peripheriebaugruppe 4 steuert. Hierzu werden dem Controller 24 die Signale der Taktleitung 20 und der Steuerleitungen 21, 22 zugeführt. Ferner wird dem Controller 24 das Rückmeldesignal der Peripheriebaugruppe 5 zugeführt. Dieses Rückmeldesignal wird im Controller 24 mit dem Rückmeldesignal der Peripheriebaugruppe 4 in geeigneter Weise logisch verknüpft und weiter an die Peripheriebaugruppe 3 gemeldet, welche das Rückmeldesignal ebenfalls in geeigneter Weise logisch verknüpft und an die Zentraleinheit 2 weitermeldet. Der Controller 24 steuert gemäß der über die Steuerleitungen 21, 22 übermittelten Steuersignale die Schalter 25 an, so daß der Bus 6 entweder als serieller Bus oder als Schieberegister betrieben wird. Der Controller 24 steuert die Schalter 25 dabei wie folgt:
Eine Befehlsübermittlung wird dadurch begonnen, daß, wie in FIG 3 und FIG 4 dargestellt, die Befehlssteuerleitung 21 auf low geht. Wenn der Controller 24 das low-Signal auf der Befehlssteuerleitung 21 detektiert, werden die Schalter 25 in die gemäß FIG 2 untere Schaltstellung geschalten. Weiterhin wird das 9-Bit-Register 26 über die Steuerleitung 27 gemäß dem über die Taktleitung 20 übertragenen Taktsignal getaktet. In gleicher Weise verfahren die anderen Peripheriebaugruppen 3 und 5. Dadurch wird der Befehl bei serieller Informationsübertragung gleichzeitig an alle Peripheriebaugruppen 3 bis 5 übermittelt. Jeder Befehl besteht aus 8 Bit, also 1 Byte. Nach der Übertragung des Bytes wird zusätzlich ein Parity-Bit mitübertragen, anhand dessen der Controller 24 Übertragungsfehler feststellen kann.

Eine Befehlsübertragung wird dadurch beendet, daß die Zentraleinheit 2 über die Befehlssteuerleitung 21 wieder ein High-Signal an die Peripheriebaugruppen 3 bis 5 übermittelt. Sobald dieser Signalwechsel in den Peripheriebaugruppen 3 bis 5 detektiert wird, prüfen die Controller 24, ob ein Übertragungsfehler vorliegt. Die Prüfung erfolgt dabei auf mehrere Arten.

Zunächst wird bei der Befehlsübertragung im Controller 24 die Anzahl der über die Taktleitung 20 übertragenen Taktsignale mitgezählt. Dadurch weiß der Controller 24, wieviele Bits in das Register 26 eingelesen wurden. Ist die Anzahl der übertragenen Bits nicht durch 9 teilbar, so liegt ein Übertragungsfehler vor.

Ferner lesen die Controller 24 unmittelbar nach dem Detektieren des Signalwechsels auf der Befehlssteuerleitung 21 das Befehlsregister 26 aus und werten den Inhalt des Befehlsregisters 26 aus.

Hierbei überprüft der Controller 24, ob das Parity-Bit den richtigen Wert aufweist. Ferner wird der übertragene Befehl auf Plausibilität überprüft, d.h., es wird geprüft, ob der Befehl überhaupt zulässig ist.

Bei 8 Bit Nutzdaten sind 256 verschiedene Bitmuster möglich. Wenn das System beispielsweise nur 60 verschiedene Befehle kennt, so werden hierfür auch nur 60 verschiedene Bitmuster benötigt. Die Prüfung auf Plausibilität kann in einem solchen Fall daher dadurch erfolgen, daß überprüft wird, ob das empfangene Bitmuster mit einem der 60 möglichen Bitmuster übereinstimmt. Wenn nicht, so liegt ein Übertragungsfehler vor.

Die Peripheriebaugruppen haben im Laufe der Befehlsübertragung die Rückmeldeleitung 23 auf low gelegt. Nunmehr, nach dem Ende der Befehlsübertragung, legen die Peripheriebaugruppen 3 bis 5 die Rückmeldeleitung 23 wieder auf high, wenn die Befehlsübertragung fehlerfrei war. Ansonsten wird die Rückmeldeleitung 23 auf low gehalten.

Die Baugruppe 5 als letzte Baugruppe legt dabei ihr Rückmeldesignal direkt auf die Rückmeldeleitung 23. Die Baugruppe 4 verundet das empfangene Rückmeldesignal mit ihrem eigenen Rückmeldesignal. Anders ausgedrückt, sie legt die Rückmeldeleitung 23 nur dann auf high, wenn sie ein high-Signal von der Baugruppe 5 empfängt und selbst ebenfalls ein high-Signal liefert. Analoges gilt für die Baugruppe 3.

Die Zentraleinheit 2 empfängt also eine positive Rückmeldung, wenn alle Peripheriebaugruppen 3 bis 5 den Befehl korrekt empfangen haben. In der Zentraleinheit 2 wird die Zeit von dem Moment an, in dem die Zentraleinheit 2 die Befehlssteuerleitung 21 wieder auf high legt, bis zu dem Zeitpunkt, in dem sie ein high-Signal auf der Rückmeldeleitung 23 detektiert, überwacht. Nur wenn die Rückmeldung von den Peripheriebaugruppen 3 bis 5 binnen einer vorgegebenen Zeitspanne von z. B. 1 µs eintrifft, wertet sie dies als korrekte Befehlsübertragung. Eine Zeitüberschreitung wird als Informationsübertragungsfehler gewertet.

In einem solchen Fall überträgt die Zentraleinheit 2 den Befehl erneut an die Peripheriebaugruppen 3 bis 5. Wenn diese zweite Befehlsübertragung erfolgreich ist, werden sodann die zu diesem Befehl korrespondierenden Daten übertragen. Falls auch diese zweite Befehlsübertragung scheitern sollte, wird der Befehl noch ein drittes Mal übertragen. Erst wenn auch diese dritte Befehlsübertragung fehlerhaft sein sollte, erfolgt eine Fehlermeldung "Busfehler". Die Zentraleinheit 2 beendet daraufhin die weitere Abarbeitung des Steuerprogramms und geht in den Stopp-Zustand. Der Abbruch der Abarbeitung des Steuerprogramms mit "Busfehler" trifft praktisch aber nur auf, wenn der Bus 6 dauerhaft gestört ist. Beispiel einer derartigen Störung ist die Unterbrechung des Busses 6 aufgrund mechanischer Einwirkung.

Nach der Befehlsübertragung erfolgt eine Datenübertragung. Je nach Befehl werden dabei entweder Daten von der Zentraleinheit 2 zu einer oder mehreren der Peripheriebaugruppen 3 bis 5 übertragen oder umgekehrt Daten von einer oder mehreren der Peripheriebaugruppen 3 bis 5 zur Zentraleinheit 2. Im folgenden wird zuerst die Übertragung von Daten von der Zentraleinheit 2 zu den Peripheriebaugruppen 3 bis 5 und sodann die umgekehrte Datenübertragung geschildert.

Bei der Übertragung von Daten von der Zentraleinheit 2 an die Peripheriebaugruppen 3 bis 5 legt die Zentraleinheit 2 gemäß FIG 3 über die Datensteuerleitung 22 zunächst ein low-Signal an. Die Peripheriebaugruppen 3 bis 5 steuern daraufhin die Schalter 25 derart an, daß sie entweder die Datenleitung 19 durchschalten oder aber das Datenregister 28 in die Datenleitung 19 einschleifen. Wenn durch den zuvor übertragenen Befehl beispielsweise nur Daten für die Peripheriebaugruppe 4 übertragen werden, dann schließen die Peripheriebaugruppen 3 und 5 die Datenleitung kurz, während die Peripheriebaugruppe 4 ihr Datenregister 28 in die Datenleitung 19 einschleift.

Die Datenübertragung selbst erfolgt völlig analog zur obenstehend beschriebenen Befehlsübertragung. Die Zentraleinheit 2 übermittelt also über die Taktleitung 20 ein Taktsignal und gleichzeitig über die Datenleitung 19 die zu übermittelnden Daten. Sowie die Zentraleinheit 2 über die Datensteuerleitung 22 wieder ein High-Signal an die Peripheriebaugruppen 3 bis 5 ausgibt, übernimmt die Peripheriebaugruppe 4 die übertragenen Daten. Die übertragenen Daten umfassen beispielsweise 2 Byte mit je einem zusätzlichen Parity-Bit pro Byte, zusammen also 18 Bit.

Die Auswertung auf Übertragungsfehler erfolgt analog zu einem übertragenen Befehl anhand der Anzahl der übertragenen Bits und anhand der Parity-Bits. Eine Plausibilitätsprüfung ist bei Datenübertragungen im Regelfall hingegen nicht möglich.

Die Prüfung auf Übertragung einer korrekten Anzahl von Bits erfolgt nicht nur in der Peripheriebaugruppe 4, sondern auch in den Peripheriebaugruppen 3 und 5. Dies erhöht die Sicherheit der Datenübertragung noch weiter.

Nach dem Beenden einer Datenübertragung, also dem erneuten Anlegen eines high-Signals an die Datensteuerleitung 22, wird wieder die Zeit bis zum Quittieren der Datenübertragung durch die Peripheriebaugruppen 3 bis 5 überwacht. Wiederum analog einer Befehlsübertragung wird eine Datenübertragung als fehlerhaft erkannt, wenn die Quittierung nicht innerhalb einer vorgegebenen Zeitspanne von z. B. 20 µs erfolgt. Wird die Datenübertragung jedoch als fehlerhaft erkannt, so wird nicht nur die Datenübertragung wiederholt, sondern auch der unmittelbar zuvor ausgegebene Befehl. Scheitert auch diese zweite Datenübertragung, wird noch ein dritter Versuch unternommen.

Scheitern drei aufeinanderfolgende Datenübertragungen, wurde also jeweils zwar der Befehl korrekt übertragen, die zugehörige Datenübertragung jedoch als fehlerhaft erkannt, so erfolgt eine Fehlermeldung "Quittungsverzug". In diesem Fall wird eine Fehlerbearbeitungsroutine aufgerufen, die je nach Steuerungsprogramm verschieden ausgestaltet sein kann. Es kann beispielsweise, analog zu einem Busfehler, die weitere Abarbeitung des Steuerungsprogramms abgebrochen werden. Ebenso kann die Fehlermeldung ignoriert werden. Es ist auch möglich, einen internen Zähler zu inkrementieren und eine Fehlermeldung an den Anwender erst dann auszugeben, wenn der Zählerstand des internen Zählers eine vorgegebene Schranke übersteigt. Der Zähler kann beispielsweise wieder zurückgesetzt werden, wenn innerhalb einer vorgegebenen Zeitspanne von beispielsweise 10 sec. kein weiterer Quittungsverzug gemeldet wird.

In FIG 4 ist nun die Datenübertragung von den Peripheriebaugruppen 3 bis 5 zur Zentraleinheit 2 dargestellt. Auf die Befehlsübertragung wird im folgenden nicht mehr eingegangen, da sie bereits obenstehend beschrieben wurde.

Der Beginn einer Datenübertragung von den Peripheriebaugruppen 3 bis 5 zur Zentraleinheit 2 wird dadurch eingeleitet, daß die Datensteuerleitung 22 auf low geht. Wenn die Peripheriebaugruppen 3 bis 5 das low-Signal detektieren, übernehmen sie die auszulesenden Daten in die Register 28. Sobald sie die Daten übernommen haben, legen sie die Rückmeldeleitung 23 auf low. Die Zeit von dem Moment an, an dem die Datensteuerleitung 22 auf low geht bis zu dem Moment, an dem die Zentraleinheit 2 ein low-Signal auf der Rückmeldeleitung 23 detektiert, wird wieder überwacht. Nur wenn die Quittierung durch die Peripheriebaugruppen 3 bis 5 binnen einer Wartezeit von z. B. 20 µs erfolgt. Wird mit dem Auslesen der Daten aus den Registern 28 begonnen.

Zum Auslesen der Register 28 übermittelt die Zentraleinheit 2 wieder ein Taktsignal über die Taktleitung 20. Die Anzahl der übermittelten Takte und damit der ausgelesenen Bits wird in den Controllern 24 wieder registriert. Die Register 28 werden dabei über die Steuerleitung 29 entsprechend dem über die Taktleitung 20 übermittelten Taktsignal getaktet. Auch beim Auslesen der Register 28 wird pro Byte Nutzdaten ein Parity-Bit mit übertragen.

Nach dem Auslesen der gewünschten Anzahl von Bits, hier 18 Bit, legt die Zentraleinheit 2 die Datensteuerleitung wieder auf high. Die Controller 24 der Peripheriebaugruppen 3 bis 5 überprüfen daraufhin, ob die Anzahl der ausgelesenen Bits durch 9 teilbar ist. Nur in diesem Fall legen sie die Rückmeldeleitung 23 auf high.

In der Zentraleinheit 2 wird wieder die Zeit zwischen dem Anlegen eines high-Signals an die Datensteuerleitung 22 und dem Detektieren eines high-Signals auf der Rückmeldeleitung 23 überwacht. Nur wenn diese Rückmeldung binnen einer Wartezeit von z. B. 1 µs erfolgt, haben die Peripheriebaugruppen eine ordnungsgemäße Datenübertragung gemeldet. Die Zentraleinheit 2 überprüft daraufhin anhand der Parity-Bits, ob ein Übertragungsfehler vorliegt. Eine Plausibilitätsprüfung der übertragenen Daten ist, analog dem Schreiben von Daten in die Peripheriebaugruppen 3 bis 5, in der Regel nicht möglich.

Nur wenn aller Fehlerüberprüfungen negativ verlaufen, also kein Übertragungsfehler festgestellt wurde, werden die Daten übernommen. Ansonsten wird die Datenübertragung als fehlerhaft festgestellt. In diesem Fall wird, analog zur Datenübertragung an die Peripheriebaugruppen 3 bis 5, der zugehörige Befehl wiederholt und sodann erneut versucht, die Daten auszulesen. Abbruchkriterium und Fehlermeldung sind völlig analog zum Ausgeben von Daten an die Peripheriebaugruppen 3 bis 5.

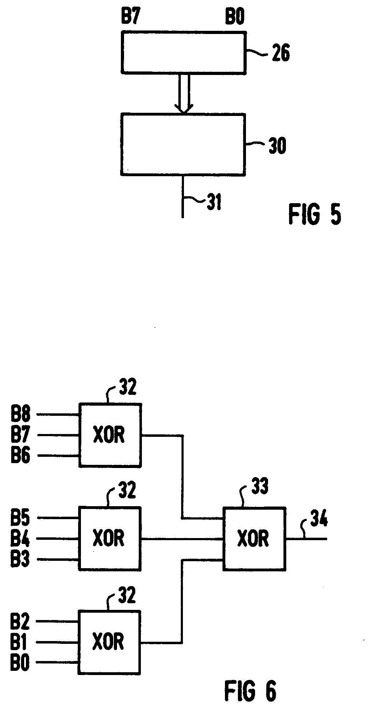

Gemäß FIG 5 können die an die Peripheriebaugruppen 3 bis 5 übertragenen Befehle dadurch leicht auf Plausibilität überprüft werden, daß die 8 Bit B7 bis B0 Nutzinformation (also der eigentliche Befehl ohne Parity-Bit) als Adresse einem Speicher 30 zugeführt werden. Der Speicher 30 ist ein Speicher mit 256 Speicherzellen zu je einem Bit. Durch die angelegte Adresse wird eines dieser Bits ausgewählt und über die Leitung 31 ausgegeben. Hat dieses Bit den Wert Null, so entspricht das empfangene Bitmuster keinem der möglichen Befehle. Die Plausibilitätsprüfung ist also negativ verlaufen. Es liegt folglich ein Übertragungsfehler vor.

Gemäß FIG 6 kann eine übertragene Information, die aus den Nutzdaten B7 bis B0 und dem Parity-Bit B8 besteht, dadurch leicht auf Übertragungsfehler überprüft werden, daß die Bits B0 bis B8 jeweils zu Dreiergruppen zusammengefaßt und jede Dreiergruppe einer der XOR-Schaltungen 32 zugeführt wird. Die Ausgangssignale dieser Schaltungen werden einer weiteren XOR-Schaltung 33 zugeführt. Bei ungerader Parität liegt ein Übertragungsfehler vor, wenn das Ausgangssignal der XOR-Schaltung 33 gleich Null. Das Ausgangssignal wird über die Leitung 34 ausgegeben.

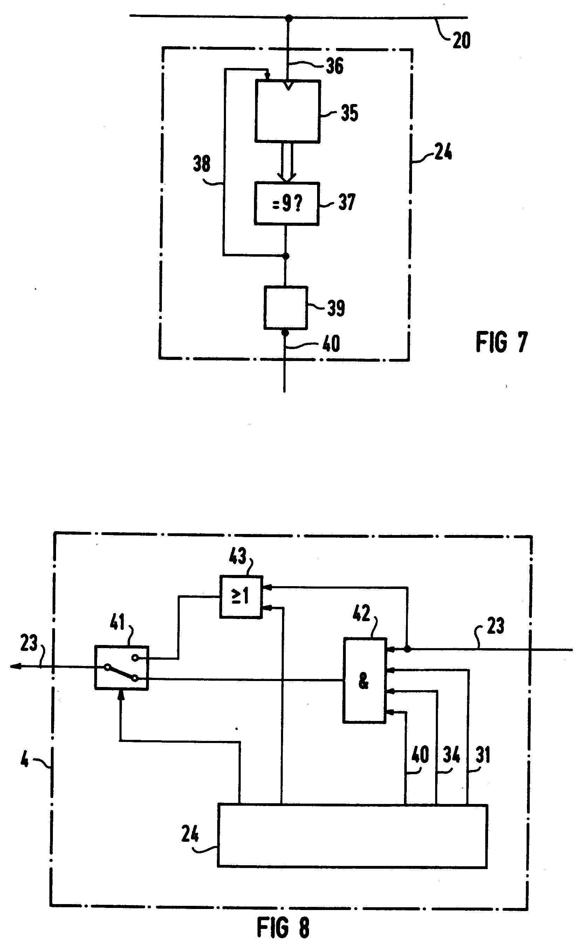

Gemäß FIG 7 kann die Anzahl der übertragenen Bits leicht dadurch festgestellt werden, daß ein Zähler 35 über die Leitung 36 mit der Taktleitung 20 verbunden ist. Das Ausgangssignal des Zählers 35 wird laufend einem Vergleicher 37 zugeführt. Der Vergleicher 37 prüft, ob der Zählerstand des Zählers 35 durch 9 teilbar ist. Wenn ja, wird der Zähler 35 über die Steuerleitung 38 auf Null zurückgesetzt. Das Ausgangssignal des Vergleichers 37 wird ferner einem Inverter 39 zugeführt, der das Ausgangssignal des Vergleichers 37 invertiert. Nur wenn am Ende einer Informationsübertragung das Ausgangssignal des Inverter 39 Eins ist, kann eine ordnungsgemäße Informationsübertragung vorliegen. Das Ausgangssignal des Inverters 39 wird über die Leitung 40 ausgegeben.

Zur ordnungsgemäßen Rückmeldung von Signalen über die Rückmeldeleitung 23 weisen die Baugruppen einen Schalter 41, ein UND-Gatter 42 und ein ODER-Gatter 43 auf. Im Normalfall befindet sich der Schalter 41, wie in FIG 8 dargestellt, in der unteren Schaltstellung, so daß das UND-Gatter 42 in die Rückmeldeleitung 23 eingeschleift ist. Wie in FIG 8 dargestellt, sind die Leitungen 31, 34 und 40 eingangsseitig mit dem UND-Gatter 42 verbunden. Die Rückmeldeleitung 23 wird folglich im Regelfall durch das Ausgangssignal des Gatters 42 auf high gelegt, wenn dem Gatter 42 sowohl über die Rückmeldeleitung 23 als auch über die Leitungen 31, 34 und 40 high-Signale zugeführt werden.

Der Schalter 41 wird nur dann in die obere Schaltstellung umgeschalten, wenn ein Befehl zum Auslesen von Daten aus den Peripheriebaugruppen 3 bis 5 an die Baugruppen 3 bis 5 übertragen wurde und die Datensteuerleitung 22 auf low geht. In diesem Fall muß nämlich die Rückmeldeleitung 23 durch das ODER-Gatter 43 auf high gehalten werden, wenn auch nur eine der Peripheriebaugruppen 3 bis 5 nicht binnen 20 µs reagiert.

Obenstehend wurde beschrieben, daß nach drei aufeinanderfolgenden, fehlerhaften Informationsübertragungen eine Fehlermeldung "Busfehler" bzw. "Quittungsverzug" erfolgt. Es ist selbstverständlich auch möglich, eine andere Anzahl von Wiederholungen, z. B. 4, vorzusehen. Die Anzahl von Wiederholungen kann auch parametrierbar sein.

## Patentansprüche

1. Informationsübertragungsverfahren für einen einem elektrischen Gerät (1) zugeordneten Bus (6), der eine Haupteinheit (2) mit mindestens einer Nebeneinheit (3 bis 5) verbindet,
- wobei Informationsübertragungen auf Fehler überprüft werden,
- wobei bei Feststellen einer fehlerhaften Informationsübertragung eine Wiederholung der Informationsübertragung erfolgt und
- wobei eine Fehlermeldung erst dann erfolgt, wenn bei einer vorgegebenen Anzahl von aufeinanderfolgenden Informationsübertragungen stets eine fehlerhafte Informationsübertragung festgestellt wurde.

2. Informationsübertragungsverfahren nach Anspruch 1, **dadurch gekennzeichnet,** daß auf dem Bus (6) mehrere Informationsarten, z. B. Befehle und Daten, übertragen werden und daß die Fehlermeldung informationsartspezifisch ist.

3. Informationsübertragungsverfahren nach Anspruch 1 oder 2, **dadurch gekennzeichnet,** daß die übertragenen Informationen auf Plausibilität überprüft werden und eine Informationsübertragung als fehlerhaft festgestellt wird, wenn die übertragenen Informationen unplausibel sind.

4. Informationsübertragungsverfahren nach Anspruch 1, 2 oder 3, **dadurch gekennzeichnet,** daß die übertragenen Informationen Nutzinformationen und Prüfinformationen umfassen, z. B. ein Parity-Bit, und daß aufgrund der Prüfinformationen festgestellt wird, ob eine Informationsübertragung fehlerhaft ist.

5. Informationsübertragungsverfahren nach einem der obigen Ansprüche, **dadurch gekennzeichnet,** daß bei einer Informationsübertragung von der Haupteinheit (2) zur mindestens einen Nebeneinheit (3 bis 5) die Haupteinheit (2) eine fehlerhafte Informationsübertragung feststellt, wenn die mindestens eine Nebeneinheit (3 bis 5) nicht innerhalb einer vorgegebenen Wartezeit ab dem Beenden der Informationsübertragung einen fehlerfreien Empfang meldet.

6. Informationsübertragungsverfahren nach einem der obigen Ansprüche, **dadurch gekennzeichnet,** daß bei einer Informationsübertragung von der mindestens einen Nebeneinheit (3 bis 5) zur Haupteinheit (2) die Haupteinheit (2) eine fehlerhafte Informationsübertragung feststellt, wenn die mindestens eine Nebeneinheit (3 bis 5) nicht innerhalb einer vorgegebenen Wartezeit ab dem Beenden der Informationsübertragung ein fehlerfreies Senden meldet.

7. Informationsübertragungsverfahren nach einem der obigen Ansprüche, **dadurch gekennzeichnet,** daß der Bus (6) als serieller Bus ausgebildet ist, daß Informationsübertragungen stets aus ganzzahligen Vielfachen einer festen Anzahl von Bits bestehen und daß eine fehlerhafte Informationsübertragung festgestellt wird, wenn die Anzahl der empfangenen Bits von einem ganzzahligen Vielfachen der festen Anzahl von Bits abweicht.

8. Informationsübertragungsverfahren nach einem der obigen Ansprüche, **dadurch gekennzeichnet,** daß es bei einem Automatisierungssystem, insbesondere einer modularen speicherprogrammierbaren Steuerung, angewendet wird.

9. Elektrisches Gerät (1), bestehend aus einer Haupteinheit (2) und mindestens einer Nebeneinheit (3 bis 5), die über einen dem elektrischen Gerät (1) zugeordneten Bus (6) untereinander Informationen übertragen können, wobei sowohl die Haupteinheit (2) als auch die mindestens eine Nebeneinheit (3 bis 5) Mittel (30 bis 40) zum Überprüfen von Informationsübertragungen auf Übertragungsfehler aufweisen.

10. Elektrisches Gerät (1) nach Anspruch 9, **dadurch-gekennzeichnet,** daß zumindest die mindestens eine Nebeneinheit (3 bis 5) Mittel (30,31) zur Plausiblitätsprüfung aufweist.

11. Elektrisches Gerät (1) nach Anspruch 9 oder 10, **dadurch gekennzeichnet,** daß sowohl die Haupteinheit (2) als auch die mindestens eine Nebeneinheit (3 bis 5) Mittel (32 bis 34) zur Auswertung von Prüfinformationen aufweisen.

12. Elektrisches Gerät (1) nach Anspruch 9, 10 oder 11, **dadurch gekennzeichnet,** daß die mindestens eine Nebeneinheit (3 bis 5) Mittel (42) zum Melden einer ordnungsgemäßen Informationsübertragung an die Haupteinheit (2) aufweist.

13. Elektrisches Gerät(1) nach einem der Ansprüche 9 bis 12, **dadurch gekennzeichnet,** daß der Bus (6) als serieller Bus ausgebildet ist und daß sowohl Haupteinheit (2) als auch die mindestens eine Nebeneinheit (3 bis 5) Mittel (35 bis 38) zum Erfassen der Anzahl der übertragenen Bits aufweisen.

14. Elektrisches Gerät (1) nach einem der Ansprüche 9 bis 13, **dadurch gekennzeichnet**, daß das elektrische Gerät (1) als Automatisierungssystem, insbesondere als modulare speicherprogrammierbare Steuerung, ausgebildet ist.

15. Nebeneinheit (3 bis 5) für ein elektrisches Gerät (1), das aus einer Haupteinheit (2) und mindestens einer Nebeneinheit (3 bis 5) besteht, wobei die Haupteinheit (2) und die mindestens eine Nebeneinheit (3 bis 5) über einen dem elektrischen Gerät (6) zugeordneten Bus (6) untereinander Informationen übertragen können, wobei die Nebeneinheit (3 bis 5) Mittel (30 bis 40) zum Überprüfen von Informationsübertragungen auf Übertragungsfehler aufweist.

16. Nebeneinheit (3 bis 5) nach Anspruch 15, **dadurch gekennzeichnet,** daß sie Mittel (30,31) zur Plausiblitätsprüfung aufweist.

17. Nebeneinheit (3 bis 5) nach Anspruch 15 oder 16, **dadurch gekennzeichnet,** daß sie Mittel (32 bis 34) zur Auswertung von Prüfinformationen aufweist.

18. Nebeneinheit (3 bis 5) nach Anspruch 15, 16 oder 17, **dadurch gekennzeichnet,** daß sie Mittel (42) zum Melden einer ordnungsgemäßen Informationsübertragung an die Haupteinheit (2) aufweist.

19. Nebeneinheit (3 bis 5) nach einem der Ansprüche 15 bis 18, **dadurch gekennzeichnet,** daß der Bus (6) als serieller Bus ausgebildet ist und daß die Nebeneinheit (3 bis 5) Mittel (35 bis 38) zum Erfassen der Anzahl der übertragenen Bits aufweist.
